# FASCICULE DE BREVET EUROPEEN

(11) **EP 3 468 733 B1**
(45) Date de publication et mention de la délivrance du brevet: **01.04.2020**
(21) Numéro de dépôt: 17723433.3
(22) Date de dépôt: 18.05.2017
(51) Int. Cl.: B22F 3/105, B29C 64/153, B29C 64/245, B33Y 10/00, B33Y 30/00

(54) **PLATEAU DE FABRICATION ADDITIVE EQUIPÉ D'UN RAIDISSEUR PRENANT LA FORME D'UNE PLAQUE ÉVIDÉE DANS UNE PARTIE DE SON ÉPAISSEUR**
BAUPLATTFORM ZUR GENERATIV HERSTELLUNG MIT EINEM PLATTENFÖRMIGEN VERSTEIFUNGSELEMENT AUSGESTATTET, DAS TEILWEISE IN DER DICKE HOHLRÄUME AUFWEIST
BUILDING PLATFORM FOR ADDITIVE MANUFACTURING EQUIPPED WITH A PLATE-LIKE STIFFENER PARTLY HOLLOWED IN ITS THICKNESS

(30) Priorité: 09.06.2016 FR 1655293
(43) Date de publication de la demande: 17.04.2019
(73) Titulaire: Compagnie Générale des Etablissements Michelin, 63000 Clermont-Ferrand (FR)
(72) Inventeur: EFFERNELLI, Albin, 63040 Clermont-Ferrand Cedex 9 (FR)
(74) Mandataire: Barascou, Frédéric
(86) Numéro de dépôt international: PCT/EP2017/062010
(87) Numéro de publication internationale: WO 2017/211566

(56) Documents cités:
- EP-A1- 2 617 554
- US-A1- 2016 052 207
- US-B1- 6 367 791

## Description

L'invention se situe dans le domaine de la fabrication additive à base de poudre par frittage ou fusion des grains de cette poudre à l'aide d'un faisceau laser et/ou d'un faisceau d'électrons.

Plus précisément, l'invention concerne la qualité géométrique des pièces fabriquées.

Le frittage ou la fusion de grains de poudre sont des procédés de fabrication qui génèrent des contraintes résiduelles dans les pièces fabriquées, et ces contraintes résiduelles sont susceptibles d'entraîner des déformations importantes du plateau de fabrication additive sur lequel sont fabriquées ces pièces. Par déformations importantes, on entend des déformations de l'ordre de quelques dixièmes de millimètres à quelques millimètres, l'amplitude des déformations variant en fonction du type de poudre et de la géométrie des pièces fabriquées.

Selon un premier inconvénient, lorsqu'un plateau de fabrication additive se déforme de manière importante pendant le processus de fabrication, les pièces supportées par ce plateau ne peuvent plus être fabriquées en respectant les tolérances dimensionnelles de fabrication.

Selon un autre inconvénient, dans le cadre d'une fabrication additive par dépôt de lit de poudre, des déformations importantes du plateau de fabrication peuvent entraîner des frottements du rouleau et/ou de la raclette du dispositif de dépôt de lit de poudre sur les pièces en cours de fabrication. Ces frottements du rouleau peuvent endommager les pièces en cours de fabrication et entraîner un arrêt prolongé de la machine de fabrication additive. Les documents US 2016/052207 A1 et US 6 367 791 B1 divulguent un plateau de fabrication additive comprenant un corps principal sur lequel les articles sont fabriqués et un raidisseur indépendant du corps principal et fixé sur la face inférieure du corps principal, ce raidisseur prenant la forme d'une plaque dont la longueur et la largeur sont plus importantes que son épaisseur. Cependant, lesdits raidisseurs divulgués dans ces documents sont évidés dans toute leur épaisseur.

Aussi, la présente invention a pour objectif de parer à au moins l'un des inconvénients précités.

A cet effet, l'invention a pour objet un plateau de fabrication additive destiné à servir de support à la fabrication d'au moins une pièce par un procédé de fabrication additive, le plateau comprenant un corps principal monolithique faisant office de support de fabrication, ce corps principal prenant la forme d'une plaque, la longueur et la largeur de cette plaque étant plus importantes que l'épaisseur de cette plaque, et le corps principal comprenant une face supérieure sur laquelle sont directement fabriquées les pièces, la plaque formant le raidisseur n'étant pas évidée dans toute son épaisseur.

Selon l'invention, le plateau de fabrication additive comprend un raidisseur indépendant du corps principal et fixé sur la face inférieure du corps principal, ce raidisseur prenant aussi la forme d'une plaque dont la longueur et la largeur sont plus importantes que son épaisseur et la plaque formant ce raidisseur étant évidée dans son épaisseur.

Toujours selon l'invention, la plaque formant le raidisseur n'est pas évidée dans toute son épaisseur. De préférence, les évidements réalisés dans la plaque débouchent uniquement en face inférieure de la plaque et pas en face supérieure de cette plaque.

En permettant d'augmenter la rigidité du plateau de fabrication additive, le raidisseur selon l'invention s'oppose aux déformations trop importantes du plateau de fabrication additive pendant le processus de fabrication, ce qui permet de respecter les tolérances de fabrication des pièces fabriquées et d'éviter un arrêt prolongé de la machine de fabrication additive.

Selon un autre avantage, le raidisseur peut être démonté du plateau de fabrication additive lorsque ce plateau est trop usé et remonté sur un plateau neuf avant que l'ensemble formé par le plateau neuf et le raidisseur soit usiné aux tolérances souhaitées.

Avantageusement, le raidisseur permet aussi de limiter les déformations du plateau de fabrication additive lorsque le plateau et les pièces fabriquées sont placés dans un four en vue de la réalisation d'un traitement thermique visant à libérer les pièces fabriquées des contraintes résiduelles issues du processus de fabrication.

Enfin, en étant évidé dans une partie de son épaisseur, le raidisseur offre un meilleur compromis entre la rigidité conférée au plateau de fabrication additive et la masse supplémentaire qu'il représente.

D'autres caractéristiques et avantages de l'invention apparaîtront dans la description qui va suivre. Cette description, donnée à titre d'exemple et non limitative, se réfère aux dessins joints en annexe sur lesquels :
- la figure 1 est une vue illustrant l'utilisation d'un plateau de fabrication additive équipé d'un raidisseur selon l'invention au sein d'une machine de fabrication additive,
- la figure 2 est une vue de dessous en perspective d'un plateau de fabrication additive équipé d'un raidisseur selon l'invention,
- la figure 3 est une vue en coupe transversale d'un plateau de fabrication additive équipé d'un raidisseur selon l'invention,
- la figure 4 est une vue en éclaté du montage d'un raidisseur selon l'invention sous un plateau de fabrication additive, et
- la figure 5 est une vue de détail des moyens de positionnement offerts par un plateau de fabrication additive équipé d'un raidisseur selon l'invention.

L'invention est relative à un plateau de fabrication additive équipé d'un raidisseur.

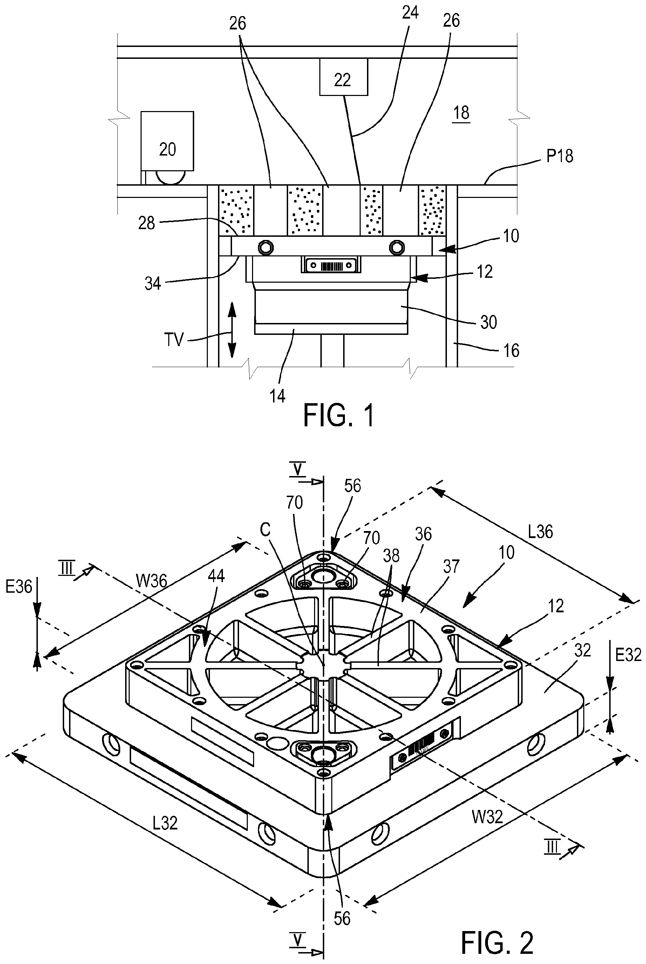

Comme l'illustre la figure 1, le plateau de fabrication additive 10 et son raidisseur 12 sont destinés à être utilisés dans une machine de fabrication additive (représentée partiellement en figure 1) pour la mise en oeuvre d'un procédé de fabrication additive.

Plus particulièrement, le plateau 10 et son raidisseur 12 sont utilisés pour mettre en oeuvre un procédé de fabrication additive par dépôt de lit de poudre.

A cet effet, le plateau 10 et son raidisseur 12 sont montés sur un actionneur 14, tel le piston d'un vérin ou l'extrémité d'une vis sans fin, permettant de faire coulisser en translation verticale le plateau 10 et son raidisseur 12 à l'intérieur d'une chemise de fabrication 16 communiquant avec la chambre de fabrication 18 de la machine de fabrication additive.

De façon connue, la machine de fabrication additive comprend dans sa chambre de fabrication 18 un dispositif de dépôt 20 permettant de déposer l'une après l'autre plusieurs couches de poudre de fabrication additive sur le plateau 10 et au moins un dispositif d'émission 22 d'un faisceau 24 pouvant être un faisceau laser, un faisceau d'électrons, ou tout autre faisceau adapté.

Comme l'illustre la figure 1, l'actionneur 14 permet d'entrainer le plateau 10 et son raidisseur 12 en translation verticale TV jusqu'au plan de travail P18 de la chambre de fabrication 18, puis l'actionneur 14 permet d'abaisser pas à pas le plateau 10 et son raidisseur 12 après chaque nouveau dépôt d'une nouvelle couche de poudre par le dispositif de dépôt 20.

A chaque dépôt d'une nouvelle couche de poudre, les grains de cette nouvelle couche de poudre subissent un frittage ou une fusion selon des contours déterminés par les formes de la ou des pièces 26 à fabriquer. Dans le cas de la présente invention, la ou les pièces 26 sont directement fabriquées sur la face supérieure 28 du plateau de fabrication additive. Par directement fabriquées sur la face supérieure 28, on entend que les pièces 26 sont solidaires du plateau de fabrication 10 à la fin du processus de fabrication et doivent être séparées du plateau 10 ultérieurement, par exemple par une découpe par fil.

Afin de solidariser le plateau 10 et son raidisseur 12 à l'actionneur 14, il est prévu un dispositif de liaison 30. Dans le cas de la présente invention, ce dispositif de liaison 30 prend de préférence la forme d'une ventouse à section circulaire, un tel dispositif de liaison présentant moins de risque de blocage en cas de déformation du plateau et moins de risque de dysfonctionnement ou d'usure prématurée au contact de la poudre que des moyens mécaniques de verrouillage.

Comme l'illustre la figure 2, le plateau 10 comprend un corps principal 32 monolithique servant de support de fabrication. Ce corps principal 32 monolithique prend la forme d'une plaque, la longueur L32 et la largeur W32 de cette plaque étant plus importantes que l'épaisseur E32 de cette plaque. Pour donner un ordre d'idées, la longueur L32 et la largeur W32 sont environ dix fois supérieures à l'épaisseur E32 de cette plaque.

Dans le mode de réalisation illustré par la figure 2, la longueur L32 et la largeur L42 de la plaque formant le corps 32 sont égales et se situent autour de trente-cinq centimètres.

Comme indiqué précédemment, le corps principal 32 comprend une face supérieure 28 sur laquelle sont directement fabriquées les pièces 26.

L'invention se situant de préférence dans le cadre de la fabrication additive de pièces 26 en alliage métallique, le corps principal est aussi réalisé dans un alliage métallique, de préférence en acier 25CD4 pour de la poudre de fabrication additive contenant de l'acier maraging, ou en alliage de titane pour une poudre de fabrication additive contenant du titane, ou en alliage d'aluminium pour une poudre de fabrication additive contenant de l'aluminium.

Afin de fabriquer les pièces 26 dans les tolérances de fabrication et d'éviter un arrêt prolongé de la machine de fabrication additive, le plateau 10 selon l'invention est équipé d'un raidisseur 12 indépendant du corps principal 32 et fixé sur la face inférieure 34 du corps principal 32.

Toujours selon l'invention, ce raidisseur 12 prend la forme d'une plaque 36 dont la longueur L36 et la largeur W36 sont plus importantes que son épaisseur E36 et la plaque 36 formant ce raidisseur 12 est évidée dans une partie de son épaisseur E36. Pour donner un ordre d'idées, la longueur L36 et la largeur W36 sont environ 6 à 7 fois supérieures à l'épaisseur E32 de cette plaque 36.

Pour faciliter le transport du plateau 10 équipé de son raidisseur 12 sur un convoyeur à bande et permettre la mise en place d'un joint d'étanchéité entre le plateau 10 et la chemise de fabrication 16, la plaque 36 a une largeur W36 inférieure à la largeur W32 du corps principal 32 et une longueur L36 inférieure à la longueur L32 du corps principal 32.

De préférence, la plaque 36 formant le raidisseur 12 est aussi réalisée dans un alliage métallique, de préférence en acier S355.

Selon l'invention et afin d'en réduire le coût de fabrication, le corps principal 32 du plateau 10 et la plaque 36 du raidisseur 12 sont fabriqués dans la masse par un procédé de moulage en fonderie puis par usinage.

Avantageusement, en restant solidaire du plateau 10 après le processus de fabrication additive et après extraction du plateau 10 de la chambre 18 de fabrication additive avec les pièces 26, le raidisseur permet aussi d'améliorer la rigidité du plateau 10 lorsque ce plateau 10 et les pièces fabriquées 26 sont placés dans un four en vue de la réalisation d'un traitement thermique visant à libérer les pièces 26 des contraintes résiduelles issues du processus de fabrication.

Selon un autre avantage, le raidisseur 12 permet d'améliorer la rigidité du plateau 10 aux hautes températures, par exemple aux alentours de 500°C, auxquelles le plateau 10 peut être soumis lors du processus de fabrication additive ou dans le four de traitement thermique.

Comme décrit ci-dessus, la plaque 36 formant le raidisseur 12 est évidée dans une partie de son épaisseur E36, ceci afin de limiter le surpoids imposé au plateau 10.

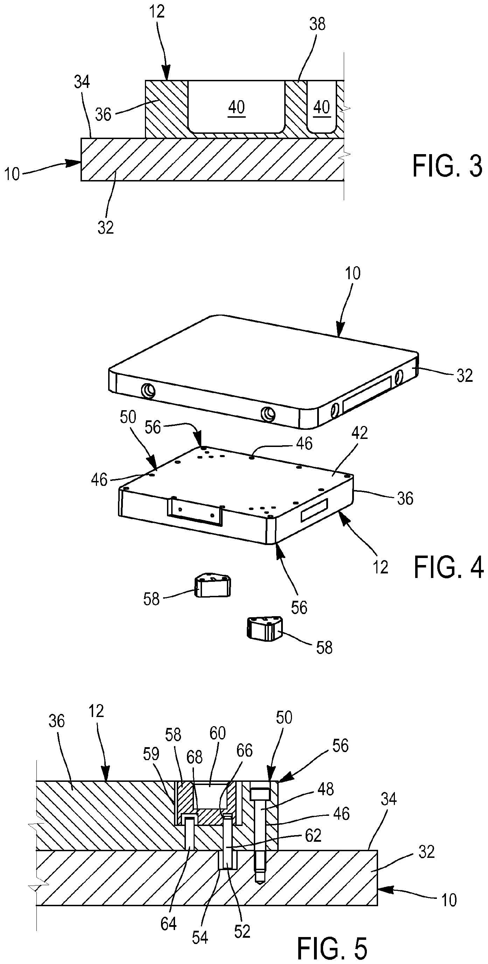

Pour garantir le bon fonctionnement de la ventouse de liaison 30 sans prévoir de liaison parfaitement étanche entre le raidisseur 12 et le plateau 10, la plaque 36 formant le raidisseur 12 n'est pas évidée dans toute son épaisseur E36. Comme le montre la figure 3, les évidements 40 réalisés dans la plaque 36 débouchent uniquement en face inférieure 37 de la plaque 36 et pas en face supérieure 42 de celle-ci.

Il est préférable que les évidements 40 débouchent en face inférieure 37 de la plaque 36 pour éviter de piéger des grains de poudre de fabrication additive entre la plaque 36 et le corps principal 32.

Afin d'optimiser la rigidité apportée au plateau 10 malgré les évidements 40, la plaque 36 formant le raidisseur 12 est évidée dans une partie de son épaisseur E36 de manière à présenter une structure nervurée dans sa largeur W36 et sa longueur L36.

De préférence, les nervures 38 de la plaque 36 forment plusieurs branches autour d'un ilot central C se situant au centre de la largeur W36 et de la longueur L36 de la plaque 36 formant le raidisseur 12. En s'étendant ainsi depuis l'ilot central C, les nervures 38 confèrent une rigidité optimale au raidisseur 12 et donc au plateau 10.

Dans une configuration optimale, les nervures 38 forment huit branches autour de l'ilot central C, une branche s'étendant tous les 45° autour de l'ilot central C.

Afin de solidariser le plateau 10 et son raidisseur 12 à l'actionneur 14 via une ventouse 30 à section circulaire, la plaque 36 comprend une surface inférieure 42 présentant une portée annulaire 44 pour la réception d'une ventouse à section circulaire 30. Cette portée annulaire 44 entoure les nervures 38. Chaque branche formée par une nervure 38 s'étend donc entre l'ilot central C et cette portée annulaire 44.

Comme le montrent les figures 3 à 5, la plaque 36 comprend une face supérieure 42 venant en appui contre la face inférieure 34 du corps principal 32.

Pour maintenir cet appui, des alésages 46 et des vis 48 sont prévus au travers de la plaque 36. Plus précisément, chaque bord 50 de la plaque 36 est maintenu par une rangée de quatre vis 48.

Pour faciliter le montage du raidisseur 12 sur le plateau 10, il est prévu deux pions de centrage 52 faisant saillie dans deux coins opposés 56 de la plaque 36, des alésages de centrage 54 étant prévus dans le corps principal 32 en face des pions de centrage 52.

Pour assurer la mise en référence du plateau 10 équipé de son raidisseur 12 à l'intérieur de la machine de fabrication additive, et par exemple par rapport à l'actionneur 14, la plaque 36 intègre deux centreurs 58 dans deux coins opposés 56. Les centreurs 58 sont intégrés car placés dans des logements 59 prévus à cet effet dans la plaque 36.

Chaque centreur 58 comprend un logement 60 utile à la mise en référence du plateau 10 équipé de son raidisseur 12 à l'intérieur de la machine de fabrication additive, et par exemple par rapport à l'actionneur 14 ou à un dispositif de transfert automatisé des plateaux.

Parallèlement, il est aussi prévu des moyens de positionnement entre chaque centreur 58 et le raidisseur 12. De préférence, ces moyens de positionnement comprennent deux pions 62 et 64 fixés dans la plaque 36, et le centreur 58 comprend un alésage 66 de réception d'un premier pion 62 et un trou oblong 68 recevant le deuxième pion 64, le trou oblong 68 autorisant une translation du deuxième pion 64 dans une direction radiale autour de l'ilot central C afin d'éviter une mise en position hyperstatique.

Avantageusement, un des pions 62 ou 64 peut aussi être utilisé pour le positionnement du raidisseur 12 par rapport au plateau 10.

Bien entendu, en parallèle des pions 62 et 64, il est prévu une fixation par vis 70 entre les centreurs 58 et la plaque 36.

Avantageusement, les centreurs 58 sont faits d'un matériau aux propriétés thermomécaniques adaptées pour pouvoir résister à l'usure et/ou à des températures élevées sans dégradation de leur précision géométrique. Cela permet de réutiliser ces centreurs 58 sur un nouveau plateau avec le même raidisseur ou sur un nouveau plateau avec un autre raidisseur. Néanmoins, en cas d'usure prématurée, les centreurs 58 peuvent aussi être remplacés indépendamment du raidisseur 12 et du plateau 10.

La présente invention couvre aussi une machine de fabrication additive comprenant un plateau 10 de fabrication additive équipé d'un raidisseur 12 tel qu'il vient d'être décrit, ainsi que l'utilisation d'un plateau 10 de fabrication additive équipé d'un raidisseur 12 dans un procédé de fabrication additive.

## Revendications

1. Plateau (10) de fabrication additive destiné à servir de support à la fabrication d'au moins une pièce (26) par un procédé de fabrication additive, le plateau (10) comprenant un corps principal (32) monolithique faisant office de support de fabrication, ce corps principal (32) prenant la forme d'une plaque, la longueur (L32) et la largeur (W32) de cette plaque étant plus importantes que l'épaisseur (E32) de cette plaque, et le corps principal (32) comprenant une face supérieure (28) sur laquelle sont directement fabriquées les pièces (26), le plateau de fabrication additive comprenant un raidisseur (12) indépendant du corps principal (32) et fixé sur la face inférieure (34) du corps principal, ce raidisseur (12) prenant la forme d'une plaque (36) dont la longueur (L36) et la largeur (W36) sont plus importantes que son épaisseur (E36) et la plaque (36) formant ce raidisseur (12) étant évidée dans son épaisseur (E36), le plateau de fabrication additive étant **caractérisé en ce que** la plaque (36) formant le raidisseur (12) n'est pas évidée dans toute son épaisseur (E36).

2. Plateau (10) de fabrication additive selon la revendication précédente, dans lequel les évidements (40) réalisés dans la plaque (36) débouchent uniquement en face inférieure (37) de la plaque (36) et pas en face supérieure (42) de cette plaque.

3. Plateau (10) de fabrication additive selon l'une des revendications précédentes, dans lequel la plaque (36) formant le raidisseur (12) est évidée dans son épaisseur (E36) de manière à présenter une structure nervurée dans sa largeur (W36) et sa longueur (L36).

4. Plateau (10) de fabrication additive selon la revendication 3, dans lequel les nervures (38) de la plaque (36) formant le raidisseur (12) forment plusieurs branches autour d'un ilot central (C) se situant au centre de la largeur (W36) et de la longueur (L36) de la plaque (36) formant le raidisseur (12).

5. Plateau (10) de fabrication additive selon l'une des revendications précédentes, dans lequel la plaque (36) a une largeur (W36) inférieure à la largeur (W32) du corps principal (32) et une longueur (L36) inférieure à la longueur (L32) du corps principal (32).

6. Plateau (10) de fabrication additive selon l'une des revendications précédentes, dans lequel la plaque (36) formant le raidisseur (12) comprend une surface inférieure (42) présentant une portée annulaire (44) pour la réception d'une ventouse (30) à section circulaire (30).

7. Plateau (10) de fabrication additive selon l'une des revendications précédentes, dans lequel la plaque (36) intègre deux centreurs (58) dans deux coins opposés (56).

8. Machine de fabrication additive comprenant un plateau (10) de fabrication additive équipé d'un raidisseur (12) selon l'une des revendications 1 à 7.

9. Procédé de fabrication additive utilisant un plateau (10) de fabrication additive équipé d'un raidisseur (12) selon l'une des revendications 1 à 7.

## Patentansprüche

1. Fertigungsplattform (10) zur additiven Fertigung, die dazu bestimmt ist, als Träger für die Fertigung mindestens eines Bauteils (26) durch ein Verfahren additiver Fertigung zu dienen, wobei die Fertigungsplattform (10) einen monolithischen Hauptkörper (32) enthält, der als Fertigungsträger dient, wobei dieser Hauptkörper (32) die Form einer Platte hat, wobei die Länge (L32) und die Breite (W32) dieser Platte größer sind als die Dicke (E32) dieser Platte, und der Hauptkörper (32) eine Oberseite (28) enthält, auf der die Bauteile (26) direkt gefertigt werden, wobei die Fertigungsplattform zur additiven Fertigung eine Versteifung (12) enthält, die vom Hauptkörper (32) unabhängig und an der Unterseite (34) des Hauptkörpers befestigt ist, wobei diese Versteifung (12) die Form einer Platte (36) annimmt, deren Länge (L36) und Breite (W36) größer sind als ihre Dicke (E36), und die diese Versteifung (12) bildende Platte (36) in ihrer Dicke (E36) ausgehöhlt ist, wobei die Fertigungsplattform zur additiven Fertigung **dadurch gekennzeichnet ist, dass** die die Versteifung (12) bildende Platte (36) nicht in ihrer ganzen Dicke (E36) ausgehöhlt ist.

2. Fertigungsplattform (10) zur additiven Fertigung nach dem vorhergehenden Anspruch, wobei die in der Platte (36) hergestellten Aushöhlungen (40) nur an der Unterseite (37) der Platte (36) und nicht an der Oberseite (42) dieser Platte münden.

3. Fertigungsplattform (10) zur additiven Fertigung nach einem der vorhergehenden Ansprüche, wobei die die Versteifung (12) bildende Platte (36) in ihrer Dicke (E36) ausgehöhlt ist, um in ihrer Breite (W36) und ihrer Länge (L36) eine mit Stegen versehene Struktur aufzuweisen.

4. Fertigungsplattform (10) zur additiven Fertigung nach Anspruch 3, wobei die Stege (38) der die Versteifung (12) bildenden Platte (36) mehrere Zweige um eine zentrale Insel (C) bilden, die sich in der Mitte der Breite (W36) und der Länge (L36) der die Versteifung (12) bildenden Platte (36) befindet.

5. Fertigungsplattform (10) zur additiven Fertigung nach einem der vorhergehenden Ansprüche, wobei die Platte (36) eine Breite (W36) kleiner als die Breite (W32) des Hauptkörpers (32) und eine Länge (L36) kleiner als die Länge (L32) des Hauptkörpers (32) hat.

6. Fertigungsplattform (10) zur additiven Fertigung nach einem der vorhergehenden Ansprüche, wobei die die Versteifung (12) bildende Platte (36) eine Unterfläche (42) enthält, die eine ringförmige Auflagefläche (44) zur Aufnahme eines Saugnapfs (30) mit kreisförmigem Querschnitt (30) aufweist.

7. Fertigungsplattform (10) zur additiven Fertigung nach einem der vorhergehenden Ansprüche, wobei zwei Zentriervorrichtungen (58) in zwei gegenüberliegenden Ecken (56) in die Platte (36) eingebaut sind.

8. Maschine zur additiven Fertigung, die eine Fertigungsplattform (10) zur additiven Fertigung enthält, die mit einer Versteifung (12) nach einem der Ansprüche 1 bis 7 ausgestattet ist.

9. Verfahren zur additiven Fertigung, das eine Fertigungsplattform (10) zur additiven Fertigung verwendet, die mit einer Versteifung (12) nach einem der Ansprüche 1 bis 7 ausgestattet ist.

## Claims

1. Additive manufacturing plate (10) intended to serve as a support for the manufacturing of at least one component (26) by an additive manufacturing process, the plate (10) comprising a monolithic main body (32) that acts as a manufacturing support, this main body (32) taking the form of a panel, the length (L32) and the width (W32) of this panel being greater than the thickness (E32) of this panel, and the main body (32) comprising an upper face (28) on which the components (26) are manufactured directly, the additive manufacturing plate comprising a stiffener (12) that is independent of the main body (32) and secured to the lower face (34) of the main body, this stiffener (12) taking the form of a panel (36) of which the length (L36) and the width (W36) are greater than the thickness (E36) thereof, and the panel (36) forming this stiffener (12) being hollowed out in its thickness (E36), the additive manufacturing plate being **characterized in that** the panel (36) forming the stiffener (12) is not hollowed out through its entire thickness (E36).

2. Additive manufacturing plate (10) according to the preceding claim, wherein the hollows (40) made in the panel (36) open out only onto the lower face (37) of the panel (36) and not onto the upper face (42) of this panel.

3. Additive manufacturing plate (10) according to either of the preceding claims, wherein the panel (36) forming the stiffener (12) is hollowed out in its thickness (E36) so as to exhibit a ribbed structure in its width (W36) and its length (L36).

4. Additive manufacturing plate (10) according to Claim 3, wherein the ribs (38) of the panel (36) forming the stiffener (12) form several branches around a central island (C) situated at the centre of the width (W36) and of the length (L36) of the panel (36) forming the stiffener (12).

5. Additive manufacturing plate (10) according to one of the preceding claims, wherein the panel (36) has a width (W36) less than the width (W32) of the main body (32) and a length (L36) less than the length (L32) of the main body (32).

6. Additive manufacturing plate (10) according to one of the preceding claims, wherein the panel (36) forming the stiffener (12) comprises a lower surface (42) having an annular bearing surface (44) for receiving a suction cup (30) of circular section (30).

7. Additive manufacturing plate (10) according to one of the preceding claims, wherein the panel (36) incorporates two centring means (58) in two opposite corners (56).

8. Additive manufacturing machine comprising an additive manufacturing plate (10) equipped with a stiffener (12) according to one of Claims 1 to 7.

9. Additive manufacturing process using an additive manufacturing plate (10) equipped with a stiffener (12) according to one of Claims 1 to 7.
